# FASCICULE DE BREVET EUROPEEN

(11) **EP 3 991 290 B1**
(45) Date de publication et mention de la délivrance du brevet: **12.08.2026**
(21) Numéro de dépôt: 20733474.9
(22) Date de dépôt: 23.06.2020
(51) Int. Cl.: H02P 11/04, H02H 3/00, H02P 29/024, H02H 3/20, H02H 7/22

(54) **COMMUTATEUR ELECTRONIQUE**
ELEKTRONISCHER KOMMUTATOR
ELECTRONIC COMMUTATOR

(30) Priorité: 26.06.2019 FR 1906985
(43) Date de publication de la demande: 04.05.2022
(73) Titulaire: Valeo Electrification, 95800 Cergy (FR)
(72) Inventeur: MORVANY, Romuald, 94046 CRETEIL CEDEX (FR); LECOCQ, Yann, 94046 CRETEIL CEDEX (FR)
(74) Mandataire: Valeo Powertrain Systems
(86) Numéro de dépôt international: PCT/EP2020/067480
(87) Numéro de publication internationale: WO 2020/260271

(56) Documents cités:
- CN-U- 203 536 942
- FR-A1- 3 053 539
- US-A1- 2008 265 682
- US-A1- 2012 112 686

## Description

La présente invention concerne un commutateur électronique et un système électrique comprenant un tel commutateur électronique destiné à piloter une machine électrique tournante.

Les véhicules électriques ou hybrides sont équipés d'un réseau d'alimentation en énergie électrique bitension. Dans un réseau de ce type, les deux réseaux de bord ont des tensions continues de service nominales différentes. Le premier réseau de bord est du type basse tension - approximativement de l'ordre de 12 V et deuxième réseau de bord est du type haute tension - approximativement de l'ordre de 48 V.

De tels véhicules électriques intègrent une machine électrique tournante dont le stator est polyphasé et piloté par un pont de puissance. À titre d'exemple non limitatif, il peut s'agir en particulier d'un alternateur ou d'un alterno-démarreur.

D'une manière générale, un système électrique permet d'interfacer la machine électrique tournante avec les réseaux de bord. Ce système électrique permet également de réaliser des fonctions de diagnostic, de communication avec le véhicule automobile et de pilotage de la machine électrique tournante. Il est connu du document D1 (US 2012/112686 A1), D2 (US 2008/0265682 A1) et D3 (CN 203 536 942 U) des interrupteurs électroniques de type MOSFETs.

Un but de la présente invention est de proposer un commutateur électronique et un système électrique comprenant un tel commutateur électronique selon l'invention et permettant, dans n'importe quelle configuration d'alimentation électrique au regard des deux réseaux de bord, de pouvoir réaliser certaines fonctions de diagnostic des réseaux de bord et/ou de la machine électrique tournante.

Un autre but de l'invention, est de proposer un commutateur électronique simple et robuste, permettant notamment de limiter les courants de fuites entre les deux réseaux de bord du véhicule automobile et d'alimenter sélectivement tout ou partie du système électrique par l'un ou l'autre des réseaux de bord.

Selon un premier aspect de l'invention, on atteint au moins l'un des objectifs précités grâce à un commutateur électronique comprenant :
- un interrupteur électronique comprenant une borne d'entrée destinée à recevoir une première tension référencée par rapport à une première référence électrique, et une borne de sortie ;
- un opérateur logique comprenant une première borne d'entrée destinée à recevoir une deuxième tension référencée par rapport à une deuxième référence électrique, une deuxième borne d'entrée reliée électriquement à ladite borne de sortie de l'interrupteur électronique, et une borne de sortie ;
- ledit interrupteur électronique étant configuré pour prendre sélectivement une première position dans laquelle sa borne d'entrée est connecté à sa borne de sortie, ou une deuxième position dans laquelle sa borne d'entrée est déconnectée de sa borne de sortie, et ledit opérateur logique étant configuré pour appliquer sur sa borne de sortie la plus grande des tensions parmi la tension présente sur sa première borne d'entrée décalé d'un offset de tension et la tension présente sur sa deuxième borne d'entrée décalée dudit offset de tension.

Ainsi, grâce à l'interrupteur électronique du commutateur électronique, il est possible d'alimenter sélectivement la borne de sortie de l'opérateur logique par la première tension ou par la deuxième tension.

Le commutateur électronique conforme au premier aspect de l'invention peut comprendre avantageusement au moins un des perfectionnements ci-dessous, les caractéristiques techniques formant ces perfectionnements pouvant être prises seules ou en combinaison

De façon optionnelle, la première tension est une tension continue, par exemple fournie par une batterie.

De façon optionnelle, la deuxième tension est une tension continue, par exemple fournie par une batterie.

De façon optionnelle, la deuxième tension est une tension continue régulée dont la variation de la tension est limitée à plus ou moins 10%, de préférence limitée à plus ou moins 5%.

De façon optionnelle, l'interrupteur électronique comprend en outre :
- un premier transistor d'interconnexion configuré pour pouvoir connecter électriquement la borne d'entrée de l'interrupteur électronique à une ligne électrique intermédiaire lorsque le premier transistor d'interconnexion est dans son état passant,
- un deuxième transistor d'interconnexion configuré pour pouvoir connecter électriquement la borne de sortie de l'interrupteur électronique à ladite ligne électrique intermédiaire lorsque le deuxième transistor d'interconnexion est dans son état passant,
- un premier dispositif de pilotage conçu pour faire passer le premier transistor d'interconnexion de l'état bloqué à l'état passant lorsque la tension présente sur la borne d'entrée de l'interrupteur électronique est supérieure à un premier seuil et de l'état passant à l'état bloqué sinon, et
- un module de commande conçu pour faire passer le deuxième transistor d'interconnexion de l'état bloqué à l'état passant lorsque le potentiel de la ligne électrique intermédiaire est supérieur à une deuxième seuil et de l'état passant à l'état bloqué sinon.

De façon optionnelle, l'interrupteur électronique comprend en outre :
- un premier transistor d'interconnexion configuré pour pouvoir connecter électriquement la borne d'entrée de l'interrupteur électronique à une ligne électrique intermédiaire lorsque le premier transistor d'interconnexion est dans son état passant,
- un deuxième transistor d'interconnexion configuré pour pouvoir connecter électriquement la borne de sortie de l'interrupteur électronique à ladite ligne électrique intermédiaire lorsque le deuxième transistor d'interconnexion est dans son état passant,
- un premier dispositif de pilotage conçu pour faire passer le premier transistor d'interconnexion de l'état bloqué à l'état passant lorsque la tension présente sur la borne d'entrée de l'interrupteur électronique est supérieure à un premier seuil et de l'état passant à l'état bloqué sinon, et
- un module de commande conçu pour faire passer le deuxième transistor d'interconnexion de l'état bloqué à l'état passant lorsque la tension présente sur la borne d'entrée de l'interrupteur électronique est supérieure au premier seuil et de l'état passant à l'état bloqué sinon.

Ainsi, lorsque le premier transistor d'interconnexion et le deuxième transistor d'interconnexion sont simultanément ouvert, les courants de fuites entre l'alimentation fournissant la première tension et l'alimentation fournissant la deuxième tension sont limités.

De façon optionnelle, le premier transistor d'interconnexion est un MOSFET.

De façon optionnelle, le premier transistor d'interconnexion est un MOSFET canal P.

De façon optionnelle, l'interrupteur électronique comprend en outre une première borne de référencement à une première référence électrique.

De façon optionnelle, le premier dispositif de pilotage comprend en outre :
- un premier transistor de contrôle, ledit premier transistor de contrôle étant un MOSFET,
- une première diode zener en série avec une première résistance de rappel,
- ladite association en série de la première diode zener et de la première résistance de rappel étant connectée entre la borne d'entrée de l'interrupteur électronique et la première borne de référencement, la cathode de la première diode zener étant connectée électriquement à la borne d'entrée de l'interrupteur électronique, l'anode de la première diode zener étant connectée électriquement à la grille du premier transistor de contrôle et à la première résistance de rappel, le drain du premier transistor de contrôle étant connectée électriquement à la grille du premier transistor d'interconnexion, et la source du premier transistor de contrôle étant connectée électriquement à la première borne de référencement.

De façon optionnelle, le premier transistor de contrôle est un MOSFET canal N.

De façon optionnelle, le deuxième transistor d'interconnexion est un MOSFET.

De façon optionnelle, le deuxième transistor d'interconnexion est un MOSFET canal P.

De façon optionnelle, l'interrupteur électronique comprend en outre une deuxième borne de référencement à une deuxième référence électrique.

De façon optionnelle, le module de commande comprend en outre :
- un deuxième transistor de contrôle, ledit deuxième transistor de contrôle étant un MOSFET,
- une résistance de polarisation en série avec une deuxième résistance de rappel,
- ladite association en série de la résistance de polarisation et de la deuxième résistance de rappel étant connectée entre la ligne électrique intermédiaire et la deuxième borne de référencement, la résistance de polarisation étant connectée électriquement par une de ses bornes à la ligne électrique intermédiaire et par l'autre de ses bornes à la grille du deuxième transistor de contrôle et à la deuxième résistance de rappel, et la deuxième résistance de rappel étant connecté électriquement par une de ses bornes à la deuxième borne de référencement, et par l'autre de ses bornes simultanément à la grille du deuxième transistor de contrôle et à la résistance de polarisation.

De façon optionnelle, le deuxième transistor de contrôle est un MOSFET canal N.

De façon optionnelle, le drain du deuxième transistor de contrôle est connecté électriquement à la grille du deuxième transistor d'interconnexion, par exemple par l'intermédiaire d'une résistance de grille.

De façon optionnelle, la source du deuxième transistor de contrôle est reliée à la deuxième référence électrique.

De façon optionnelle, l'interrupteur électronique comprend en outre une borne de commande et le module de commande comprend en outre un module d'activation conçu pour forcer le deuxième transistor d'interconnexion dans son état bloqué lorsqu'un signal de commande est reçu sur la borne de commande de l'interrupteur électronique.

De façon optionnelle, le module d'activation comprend un transistor bipolaire NPN dont l'émetteur est connecté électriquement à la deuxième borne de référencement, le collecteur est relié électriquement à la grille du deuxième transistor de contrôle et à la ligne intermédiaire par l'intermédiaire de la résistance de polarisation, et la base est connectée électriquement à la borne de commande du commutateur électronique.

De façon optionnelle, l'interrupteur électronique comprend en outre un dispositif de protection de la ligne électrique intermédiaire conçu pour relier électriquement la ligne électrique intermédiaire à la deuxième référence électrique par l'intermédiaire de la résistance de polarisation lorsque la différence de tension entre la ligne électrique intermédiaire et la deuxième référence électrique est supérieure à un troisième seuil.

De façon optionnelle, l'opérateur logique comprend une première diode et une deuxième diode, l'anode de la première diode étant reliée électriquement à la deuxième borne d'entrée de l'opérateur logique, l'anode de la deuxième diode étant reliée électriquement à la première borne d'entrée de l'opérateur logique, la cathode de la première diode étant reliée électriquement à la cathode de la deuxième diode, la borne de sortie de l'opérateur logique étant relié électriquement à un point situé entre la cathode de la première et la cathode de la deuxième diode.

Ainsi, la première diode permet également de limiter les courants de fuites entre l'alimentation fournissant la première tension et l'alimentation fournissant la deuxième tension.

Selon un deuxième aspect de l'invention, il est proposé un système électrique destiné à contrôler une machine électrique tournante d'un véhicule automobile, le système électrique comprenant un commutateur électronique conforme au premier aspect de l'invention ou selon l'un quelconque de ses perfectionnements, une première borne d'alimentation électrique destinée à recevoir un signal d'alimentation électrique haute tension référencée par rapport à la deuxième référence électrique, une source d'alimentation électrique configurée pour, à partir du signal d'alimentation électrique haute tension reçu sur la première borne d'alimentation électrique, fournir un signal d'alimentation électrique basse tension régulée sur la première borne d'entrée de l'opérateur logique dudit commutateur électronique.

L'invention sera mieux comprise à la lumière de la description qui va suivre, donnée uniquement à titre d'exemple non limitatif et faisant référence aux figures suivantes.

### BREVE DESCRIPTION DES FIGURES

[Fig 1] illustre une vue schématique d'un mode de réalisation d'un système électrique conforme au deuxième aspect de l'invention ;
[Fig 2] représente l'état fonctionnel du système électrique dans un mode de réalisation de l'invention lorsque les signaux d'alimentation basse tension et haute tension sont simultanément présents aux bornes du système électrique ;
[Fig 3] représente l'état fonctionnel du système électrique dans un mode de réalisation de l'invention lorsque seul le signal d'alimentation haute tension est présent aux bornes du système électrique ;
[Fig 4] représente l'état fonctionnel du système électrique dans un mode de réalisation de l'invention lorsque seul le signal d'alimentation basse tension est présent aux bornes du système électrique ; et
[Fig 5] illustre un mode de réalisation d'un commutateur électronique conforme au premier aspect de l'invention.

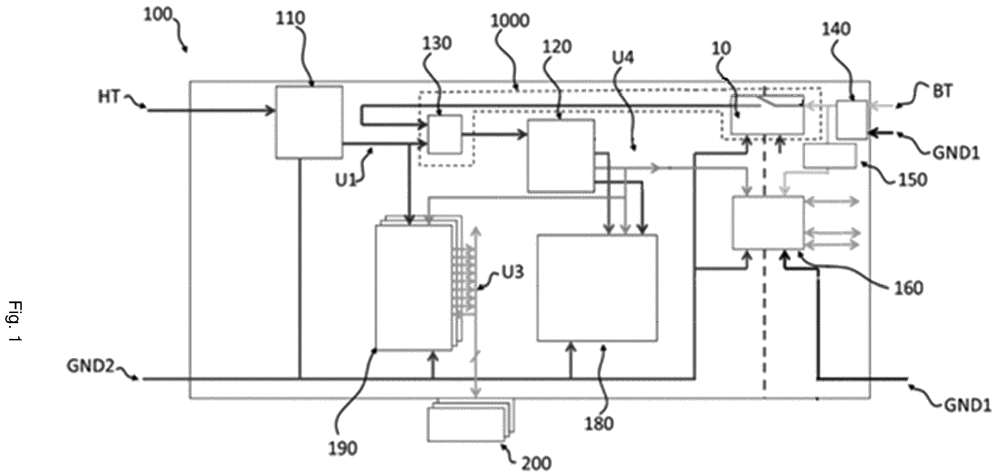

En référence à la [Fig 1], un premier exemple de réalisation d'un système électrique 100 conforme au deuxième aspect de l'invention est illustré.

Comme décrit précédemment, le système électrique 100 permet d'interfacer une machine électrique tournante (non représentée) avec les réseaux de bord du véhicule automobile.

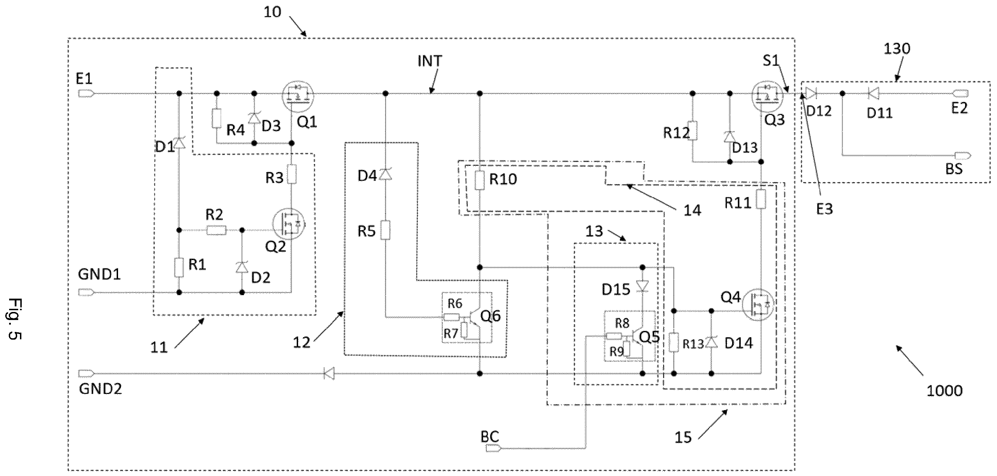

Le système électrique 100 illustré sur la [Fig 1] comprend les éléments suivants :
- une première borne d'alimentation électrique (non représentée) sur laquelle parvient un signal d'alimentation électrique basse tension BT depuis un réseau électrique basse tension du véhicule automobile sur lequel le système électrique 100 est monté. Le signal d'alimentation électrique basse tension BT est une tension d'alimentation basse tension. De manière non limitative, cette tension d'alimentation basse tension a une amplitude comprise entre 6 V et 18 V ;
- une première borne de référence électrique (non représentée) mise à une première référence électrique (GND1) et permettant de référencer le signal d'alimentation électrique basse tension BT. De façon avantageuse, cette première référence électrique (GND1) est une première masse ;
- une deuxième borne d'alimentation électrique (non représentée) sur laquelle parvient un signal d'alimentation électrique haute tension HT depuis un réseau de bord du véhicule automobile sur lequel le système électrique 100 est monté. Le signal d'alimentation électrique haute tension HT est une tension d'alimentation haute tension De manière non limitative, cette tension d'alimentation haute tension HT a une amplitude comprise entre 24 V et 54 V ;
- une deuxième borne de référence électrique (non représentée) mise à une deuxième référence électrique (GND2) et permettant de référencer le signal d'alimentation électrique haute tension HT. De façon avantageuse, cette deuxième référence électrique (GND2) est une deuxième masse ;
- une alimentation à découpage 110 permettant de fournir sous forme de tension un signal d'alimentation basse tension régulée U1 à partir du signal d'alimentation électrique haute tension HT. De manière non limitative, le signal d'alimentation basse tension régulée U1 a une amplitude de 14V plus ou moins 5% ;
- un commutateur électronique 1000 comprenant un interrupteur électronique 10 et un opérateur logique 130. Le commutateur électronique 1000 sera décrit plus en détail en référence à la [Fig 5]. De manière schématique, le commutateur électronique 1000 est configuré pour pouvoir prendre :
   - une configuration fermée dans laquelle une borne de sortie BS (non représentée sur la [Fig 1]) de l'opérateur logique 130 est reliée électriquement à une borne d'entrée E1 de l'interrupteur électronique 10 sur laquelle est connectée le signal d'alimentation électrique basse tension BT, par l'intermédiaire de l'opérateur logique 130 et de l'interrupteur électronique 10 ; ou
   - une configuration ouverte dans laquelle la borne de sortie BS (non représentée sur la [Fig 1]) de l'opérateur logique 130 n'est pas reliée électriquement à une borne d'entrée E1 de l'interrupteur électronique 10 sur laquelle est connectée le signal d'alimentation électrique basse tension BT.
- un module électronique 120 permettant notamment de générer une pluralité de sous-tensions d'alimentation U4 à partir du signal électrique d'alimentation présent sur la borne de sortie BS du commutateur électronique 1000, ledit signal d'alimentation électrique étant respectivement le signal d'alimentation électrique basse tension BT ou le signal d'alimentation électrique basse tension régulé U1 selon la configuration fermée ou ouverte du commutateur électronique 1000. Les sous-tensions d'alimentation U4 générées par le module électronique 120 permettent d'alimenter une partie des composants électroniques du système électrique. À titre d'exemples non limitatifs, les sous-tensions d'alimentation U4 générées par le module électronique 120 ont une amplitude qui peut être égale à 1 V ou 3 V ou 5 V ou 6 V. Dans un mode de réalisation particulier de l'invention, le module électronique 120 peut être mis en œuvre par un circuit SBC (acronyme anglais pour « System Basic Chip »);
- une unité de contrôle 180 permettant de réaliser une pluralité de fonctions, telles que par exemples des fonctions d'analyse ou de diagnostic du système électrique et/ou de la machine électrique tournante et/ou du réseau électrique du véhicule automobile ou de certains autres de ses organes. L'unité de contrôle 180 est avantageusement alimentée électriquement par l'une des sous-tensions d'alimentation U4 fournies par le module électronique 120. En d'autres termes, il est nécessaire d'alimenter au moins le module électronique 120 afin de pouvoir exploiter les fonctions d'analyse et de diagnostic de l'unité de contrôle 180 ;
- une ou plusieurs unités de contrôle 190 générant une pluralité de signaux de commande U3 des grilles de transistors de puissance d'un ou plusieurs modules de puissance 200 destinés à piloter la machine électrique tournante, lesdits signaux de commande U3 étant transmis par le système électrique 100 à ou aux modules de puissance 200. La ou les unités de contrôle 190 sont alimentées par l'une des sous-tensions d'alimentation U4 et/ou par le signal d'alimentation électrique basse tension régulé U1. ;
- un bus de communication 160 permettant de communiquer avec les autres organes du véhicule automobile et/ou avec la machine électrique tournante. Le bus de communication 160 est avantageusement alimenté par :
   - une alimentation spécifique 150 basse tension qui permet de générer un signal d'alimentation du bus de communication 160 à partir de la tension d'alimentation électrique basse tension BT parvenant sur le système électrique 100 ; et/ou
   - par au moins une des sous-tensions d'alimentation U4 fournies par le module électronique 120.
Il est à noter que le bus de communication 160 fonctionne normalement lorsqu'il est alimenté simultanément par l'alimentation spécifique 150 basse tension et par ladite au moins une sous-tension d'alimentation U4.

En fonction de la configuration du véhicule automobile, l'un ou l'autre des signaux d'alimentation électrique BT, HT peut être disponible, ou encore les deux signaux d'alimentation électrique BT, HT peuvent être simultanément disponibles afin d'alimenter électriquement le système électrique 100. Par disponible, on entend que le signal d'alimentation électrique correspondant est compris dans la plage de valeur décrite précédemment. Plus particulièrement, un signal d'alimentation électrique BT, HT n'est pas disponible lorsque son amplitude est nulle ou quasi nulle.

Le système électrique 100 illustré à la [Fig 1] comprend également un filtre électromagnétique 140 relié électriquement à l'interrupteur électronique 10 et à la première borne d'alimentation électrique sur laquelle parvient le signal d'alimentation électrique basse tension BT afin d'isoler, ou à tout le moins de réduire, les perturbations électromagnétiques générées par d'autres équipements électrique fonctionnant à proximité du système électrique 100 sur le signal électrique basse tension BT et sur la première référence électrique GND1 ;

En variante, le système électrique 100 peut ne pas comporter de filtre électromagnétique 140.

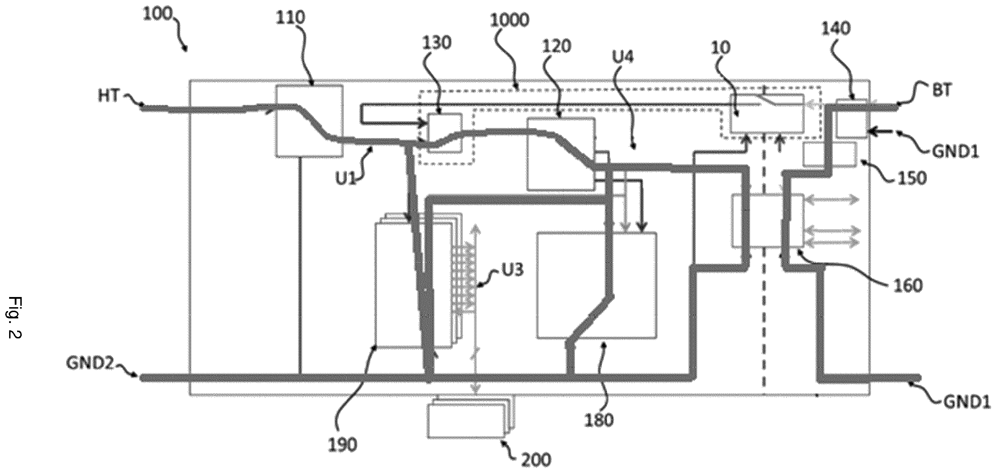

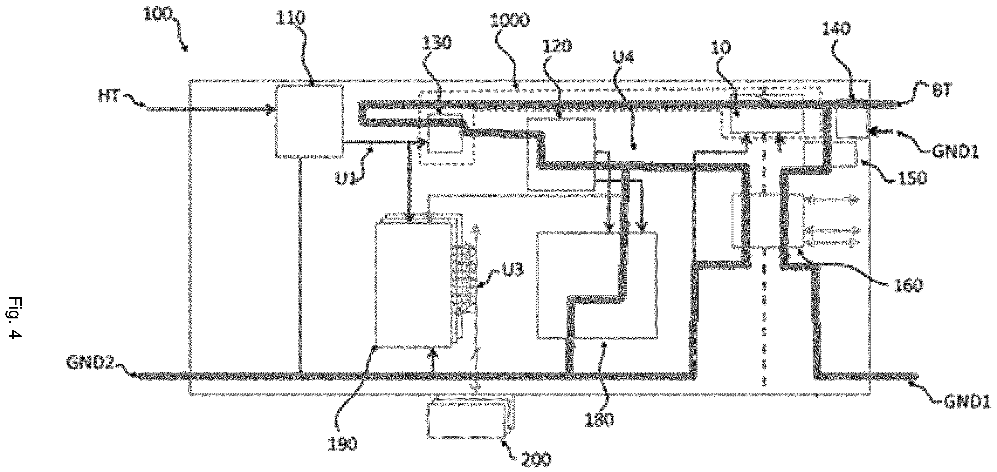

Les [Fig 2] à [Fig 4] illustrent l'état fonctionnel du système électrique 100 décrit précédemment - et notamment la configuration du commutateur électronique 1000 - en fonction de la disponibilité des signaux d'alimentation électrique BT, HT.

Il est à noter que lorsqu'aucun des signaux d'alimentation électrique BT, HT n'est disponible, le commutateur électronique 1000 est configuré dans sa configuration ouverte afin de réaliser une isolation du réseau électrique basse tension par rapport au réseau électrique haute tension du véhicule automobile.

La [Fig 2] illustre un premier état dans lequel le signal d'alimentation électrique basse tension BT et le signal d'alimentation électrique haute tension HT sont simultanément non nuls, c'est-à-dire qu'ils sont simultanément disponibles au niveau des première et deuxième bornes d'alimentation électrique du système électrique 100. Dans ce cas, le commutateur électronique 1000 est configuré dans sa configuration ouverte afin de réaliser une isolation du réseau électrique basse tension par rapport au réseau électrique haute tension du véhicule automobile et d'éviter que le réseau basse tension dudit véhicule automobile ne soit perturbé. Le signal d'alimentation électrique basse tension BT arrivant sur la première borne d'alimentation électrique du système électrique 100 se propage au niveau de l'alimentation spécifique 150 qui génère alors le signal d'alimentation du bus de communication 160. De même, le signal d'alimentation électrique haute tension HT arrivant sur la deuxième borne d'alimentation électrique du système électrique 100 se propage au niveau de l'alimentation à découpage 110 qui génère le signal d'alimentation basse tension régulé U1. Ce signal d'alimentation électrique basse tension régulé U1 est ensuite transmis sur la borne de sortie BS de l'opérateur logique 130 du commutateur électronique 1000 et arrive sur le module électronique 120 qui génère les sous-tensions d'alimentation U4 alimentant entre autre le bus de communication 160, le module de contrôle 180 et la ou les unités de contrôle 190.

Ainsi, dans ce premier état du système électrique 100, ledit système électrique 100 est complètement fonctionnel et toutes les fonctions logiques et/ou d'analyse et/ou de puissance du système électrique 100 sont actives afin de piloter notamment la machine électrique tournante.

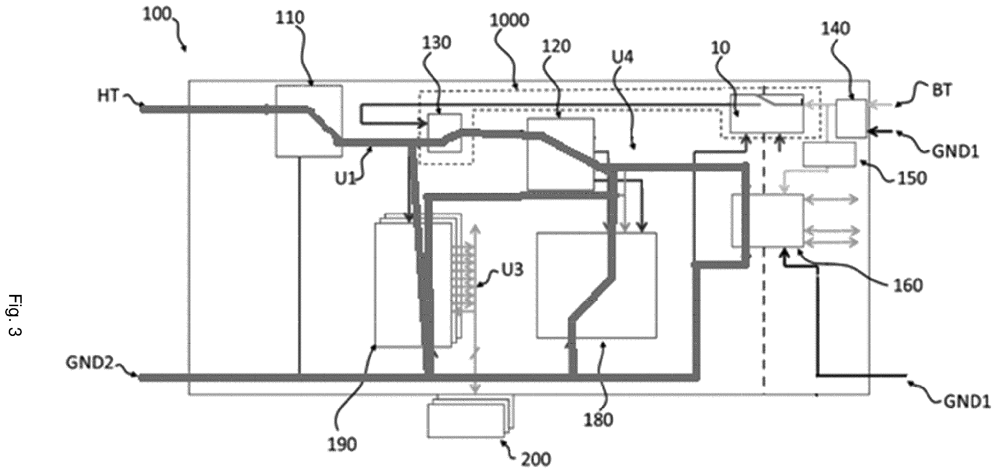

La [Fig 3] illustre un deuxième état dans lequel le signal d'alimentation électrique basse tension BT est nul ou quasi nul et le signal d'alimentation électrique haute tension HT est non nul. En d'autres termes, le signal d'alimentation électrique basse tension BT n'est pas disponible au niveau de la première borne d'alimentation électrique ; et le signal d'alimentation électrique haute tension HT est disponible au niveau de la deuxième borne d'alimentation électrique dudit système électrique 100. Dans ce cas, le commutateur électronique 1000 est configuré dans sa configuration ouverte afin de réaliser une isolation du réseau électrique basse tension par rapport au réseau électrique haute tension du véhicule automobile et d'éviter que le réseau basse tension dudit véhicule automobile ne soit perturbé. Comme le signal d'alimentation électrique basse tension BT arrivant sur la première borne d'alimentation électrique du système électrique 100 a une amplitude nulle ou quasi-nulle, le bus de communication 160 n'est pas alimenté par son alimentation spécifique 150 et il est donc inactif : une communication avec les autres organes du véhicule automobile et vers la machine électrique tournante n'est pas possible dans ce cas.

Le signal d'alimentation électrique haute tension HT parvenant sur la deuxième borne d'alimentation électrique du système électrique 100 permet d'alimenter électriquement l'alimentation à découpage 110 afin de générer le signal d'alimentation basse tension régulée U1. L'opérateur logique 130 est configuré de manière à relier sa borne de sortie sortie BS à sa première borne d'entrée E2 afin d'orienter le signal d'alimentation électrique basse tension régulé U1 en direction du module électronique 120, participant ainsi à l'isolation électrique entre la partie basse tension et la partie haute tension du système électrique 100. Consécutivement, le module électronique 120 est alimenté et il est donc actif : il produit la pluralité de sous-tensions d'alimentation U4 qui permettent d'activer le module de contrôle 180 du système électrique. De manière comparable, la ou les unités de contrôle 190 des grilles de transistors de puissance du ou des modules de puissance 200 sont alimentées électriquement et elles sont donc actives.

Ainsi, dans ce deuxième état du système électrique 100, ledit système électrique 100 peut fonctionner dans un mode dit autonome, sans communication avec les autres organes du véhicule automobile mais tout en pouvant cependant piloter la machine électrique tournante via son module de puissance 200.

La [Fig 4] illustre un troisième état dans lequel le signal d'alimentation électrique basse tension BT est non nul et le signal d'alimentation électrique haute tension HT est nul ou quasi nul. En d'autres termes, le signal d'alimentation électrique basse tension BT est disponible au niveau de la première borne d'alimentation électrique et le signal d'alimentation électrique haute tension HT n'est pas disponible au niveau de la deuxième borne d'alimentation électrique du système électrique 100. Dans ce cas, le commutateur électronique 1000 est configuré dans sa configuration fermée afin de permettre une alimentation électrique basse tension d'au moins une partie des composants du système électrique 100. Plus particulièrement, l'interrupteur électronique 10 du commutateur électronique 1000 est configuré pour relier électriquement sa borne de sortie S1 à sa borne d'entrée E1 et l'opérateur logique 130 du commutateur électronique 1000 est configurée de manière à relier électriquement sa borne de sortie BS à sa deuxième borne d'entrée E3, elle-même reliée à la borne de sortie S1 de l'interrupteur électronique 10.

Consécutivement, le signal d'alimentation électrique basse tension BT arrivant sur la première borne d'alimentation électrique du système électrique 100 se propage au travers du commutateur électronique 1000 jusqu'à atteindre le module électronique 120 afin de générer la pluralité de sous-tensions d'alimentation U4 qui permettent d'activer ensuite le bus de communication 160 et le module de contrôle 180 du système électrique afin de réaliser au moins certaines fonctions d'analyses dudit système électrique 100 et/ou de la machine électrique tournante.

Complémentairement, et tel que décrit précédemment en référence à la [Fig 2], le signal d'alimentation électrique basse tension BT arrivant sur la première borne d'alimentation électrique du système électrique 100 se propage aussi au niveau de l'alimentation spécifique 150 qui génère alors le signal d'alimentation du bus de communication 160. Le bus de communication est actif puisqu'il est alimenté simultanément par l'alimentation spécifique 150 basse tension et par une sous-tension d'alimentation U4. et une communication avec les autres organes du véhicule automobile et avec la machine électrique tournante est donc possible dans ce cas.

Dans l'exemple de fonctionnement illustré sur la [Fig 4], comme le signal d'alimentation électrique haute tension HT parvenant sur la deuxième borne d'alimentation électrique du système électrique 100 est nul ou quasi-nul, la machine électrique tournante ne peut être pilotée par le ou les modules de puissance 200.

Ainsi, dans ce troisième état du système électrique 100 et grâce à l'utilisation du commutateur électronique 1000, ledit système électrique 100 peut réaliser des fonctions de diagnostic malgré une indisponibilité du signal d'alimentation électrique haute tension HT, par exemple à cause d'une défaillance. Cette configuration avantageuse n'est pas possible avec les systèmes électriques connus jusqu'alors.

La [Fig 5] illustre une vue schématique d'un premier mode de réalisation du commutateur électronique 1000 conforme au premier aspect de l'invention et tel que mis en œuvre sur le système électrique 100 décrit précédemment.

Le commutateur électronique 1000 illustré sur la [Fig 5] comprend :
- un interrupteur électronique 10, et
- un opérateur logique 130.

L'interrupteur électronique 10 comprend :
- une borne d'entrée E1 référencée par rapport à une première référence électrique GND1 et destinée à recevoir une première tension BT,
- une borne de sortie S1,
- une borne de commande BC
- une première borne de référencement à une première référence électrique GND1, et
- une deuxième borne de référencement à une deuxième référence électrique GND2.

La première tension BT est une basse tension. En d'autres termes, l'amplitude de la première tension BT est comprise entre 6 V et 18 V.

L'interrupteur électronique est en outre configuré pour prendre sélectivement une première position dans laquelle la borne d'entrée E1 est connecté à la borne de sortie S1 et une deuxième position dans laquelle la borne d'entrée E1 est déconnectée de la borne de sortie S1.

L'opérateur logique 130 comprend :
- une première borne d'entrée E2 référencée par rapport à une deuxième référence électrique GND2 et destinée à recevoir une deuxième tension U1,
- une deuxième borne d'entrée E3 reliée électriquement à la borne de sortie S1 de l'interrupteur électronique 10,
- une borne de sortie BS.

La deuxième tension U1 est une basse tension régulée. Dans l'exemple décrit ici, la valeur de la deuxième tension U1 est de 14V +/- 5%.

Le commutateur électronique 1000 comprend donc deux entrées différentes, à savoir la borne d'entrée E1 de l'interrupteur électronique 10 et la première borne d'entrée E2 de l'opérateur logique 130, une borne de commande BC, une borne de sortie BS, une première borne de référencement à une première référence électrique GND1 et une deuxième borne de référencement à une deuxième référence électrique GND2.

La borne de sortie BS permet d'alimenter le module électronique 120 lorsque le commutateur électronique 1000 est intégré dans le système électrique 100 décrit précédemment.

Dans l'exemple de réalisation décrit ici, l'opérateur logique 130 est un OU à diode. Cet opérateur logique 130 comprend donc une première diode D12 et une deuxième diode D11. L'anode de la première diode D12 est reliée électriquement à la deuxième borne d'entrée E3, l'anode de la deuxième diode D11 est reliée électriquement à la première borne d'entrée E2, la cathode de la première diode D12 est reliée électriquement à la cathode de la deuxième diode D11, la borne de sortie BS est relié électriquement à la cathode de la première diode D12 et à la cathode de la deuxième diode D11.

En outre dans l'exemple de réalisation décrit ici, les diodes D11 et D12 sont choisies pour avoir des tensions de seuil identiques. Ainsi, dans cet exemple de réalisation, l'opérateur logique 130 est configuré pour appliquer sur la borne de sortie BS la plus grande des tensions parmi la tension présente sur la première borne d'entrée E2 décalé d'un premier offset de tension et la tension présente sur la deuxième borne d'entrée E3 décalée du même offset de tension, ledit offset de tension étant égale à la valeur de la tension de seuil des diodes D11 et D12.

Ainsi, l'opérateur logique 130 permet de relier sélectivement la borne de sortie BS de l'opérateur logique 130 au signal électrique basse tension BT présent sur sa deuxième borne d'entrée E3 décalé d'un offset de tension ou au signal électrique basse tension régulé U1 présent sur sa première borne d'entrée E2 décalé du même offset de tension.

En d'autres termes et à l'offset de tension près, le commutateur électronique 1000 permet de relier sélectivement sa borne de sortie BS au signal électrique basse tension BT présent sur sa borne d'entrée E1 lorsque l'interrupteur électronique est dans sa première position ou au signal électrique basse tension régulé U1 présent sur sa première borne d'entrée E2.

Dans l'exemple de réalisation illustré sur la [Fig 5], l'interrupteur électronique 10 du commutateur électronique 1000 comprend également une ligne électrique intermédiaire INT, un premier transistor d'interconnexion Q1, et un deuxième transistor d'interconnexion Q3.

Le premier transistor d'interconnexion Q1 est configuré pour pouvoir connecter électriquement la borne d'entrée E1 à la ligne électrique intermédiaire INT lorsque ledit premier transistor d'interconnexion Q1 est dans un état passant et pour déconnecter électriquement la borne d'entrée E1 de la ligne électrique intermédiaire INT lorsque ledit premier transistor d'interconnexion Q1 est dans un état bloquée. En d'autres termes, dans l'état passant, respectivement bloquée, le transistor d'interconnexion Q1 se comporte comme un interrupteur fermé, respectivement ouvert.

Le deuxième transistor d'interconnexion Q3 est configuré pour pouvoir connecter ou déconnecter électriquement la borne de sortie S1 de l'interrupteur électronique 10 à la ligne électrique intermédiaire INT en fonction de l'état passant ou bloqué dudit deuxième transistor d'interconnexion Q3. En particulier, lorsque le deuxième transistor d'interconnexion Q3 est configuré dans son état bloqué, alors la ligne électrique intermédiaire INT n'est pas raccordée électriquement à la borne de sortie S1. En revanche, lorsque le deuxième transistor d'interconnexion Q3 est configuré dans son état passant, alors la ligne électrique intermédiaire INT est raccordée électriquement à la borne de sortie S1.

En d'autres termes, lorsque le premier et le deuxième transistor d'interconnexion sont dans leurs état passant, la ligne électrique intermédiaire INT permet de raccorder électriquement la borne d'entrée E1 et la borne de sortie S1 de l'interrupteur électronique 10.

Le premier transistor d'interconnexion Q1 et le deuxième transistor d'interconnexion Q3 sont préférentiellement du type d'un MOSFET canal P.

La source du premier transistor d'interconnexion Q1 est reliée électriquement à la borne d'entrée E1 et le drain du premier transistor d'interconnexion Q1 est reliée électriquement à la ligne électrique intermédiaire INT.

Le drain du deuxième transistor d'interconnexion Q3 est reliée électriquement à la borne de sortie S1 de l'interrupteur électronique 10 et la source du deuxième transistor d'interconnexion Q3 est reliée électriquement à la ligne électrique intermédiaire INT.

Lorsque le premier transistor d'interconnexion Q1 et le deuxième transistor d'interconnexion Q3 sont simultanément configurés dans leur état passant, alors le commutateur électronique 1000 est dit être dans son état fermé tel que décrit précédemment, en référence à la [Fig 4]. Dans toutes les autres configurations des états de conduction des premier et deuxième transistors d'interconnexion Q1, Q3, le commutateur électronique 1000 est dit être dans son état ouvert tel que décrit précédemment, en référence tout particulièrement aux [Fig 2] et [Fig 3].

De façon optionnelle, une diode zener de protection D3 du premier transistor d'interconnexion Q1 est placée en dérivation entre sa source et sa grille afin de protéger ladite grille dudit premier transistor d'interconnexion Q1.

De façon optionnelle, une résistance de rappel R4 du premier transistor d'interconnexion Q1 est placée en parallèle de ladite diode zener de protection D3 dudit premier transistor d'interconnexion Q1.

De façon optionnelle, une diode de protection D13 du deuxième transistor d'interconnexion Q3 est placée en dérivation entre sa source et sa grille afin de protéger ladite grille dudit deuxième transistor d'interconnexion Q3. De façon avantageuse, la diode de protection D13 est une diode zener.

De façon optionnelle, une résistance de rappel R12 du deuxième transistor d'interconnexion Q3 est placée en parallèle de la diode de protection D13 dudit deuxième transistor d'interconnexion Q3.

L'interrupteur électronique 10 illustré sur la [Fig 5] comprend également un premier dispositif de pilotage 11 permettant de polariser la grille du premier transistor d'interconnexion Q1 en fonction d'une valeur de la tension BT présent sur la borne d'entrée E1. Ainsi, lorsque la valeur de la tension BT présente sur la borne d'entrée E1 et mesurée par rapport à la première référence électrique GND1 dépasse un seuil, par exemple prédéterminé, le dispositif de pilotage 11 pilote la grille du transistor d'interconnexion Q1 pour le mettre dans un état passant. A contrario, lorsque la valeur de la tension BT présente sur la borne E1 est inférieur au même seuil, le dispositif de pilotage 11 pilote la grille du premier transistor d'interconnexion Q1 pour le mettre dans un état bloqué.

Dans cet exemple de réalisation, le premier dispositif de pilotage 11 comprend :
- un premier transistor de contrôle Q2 configuré pour piloter un état de conduction du premier transistor d'interconnexion Q1.
- une première diode zener D1 en série avec une résistance de rappel R1, l'association en série de la première diode zener D1 et de la résistance de rappel R1 étant connectée entre la borne d'entrée E1 de l'interrupteur électronique 10 et la première référence électrique GND1.

Dans l'exemple décrit ici, le premier transistor de contrôle Q2 est un MOSFET canal N. Le drain du premier transistor de contrôle Q2 est relié électriquement à la grille du premier transistor d'interconnexion Q1, la source du premier transistor de contrôle Q2 est connectée électriquement à la première référence électrique GND1. En outre, la cathode de la première diode zener D1 est connectée électriquement à la borne d'entrée E1 de l'interrupteur électronique 10 tandis que l'anode de la première diode zener D1 est connectée électriquement à la grille du premier transistor de contrôle Q2 et à la résistance de rappel R1.

En d'autres termes, un point intermédiaire entre la première diode D1 et la résistance de rappel R1 est connectée électriquement à la grille du premier transistor de contrôle Q2 du premier dispositif de pilotage 11, par exemple comme dans l'exemple décrit ici par l'intermédiaire d'une résistance de grille R2.

Ainsi, si la valeur de la tension BT dépasse un premier seuil défini par la tension zener de la première diode zener D1, alors la première diode zener D1 est traversée par un courant inverse et polarise, en collaboration avec la résistance de rappel R1, la grille du premier transistor de contrôle Q2 afin de le configurer dans son état passant. En revanche, tant que la valeur de la tension BT est inférieure au seuil, alors la première diode zener D1 est bloquée et aucun courant ne circule vers la grille du premier transistor de contrôle Q2 : ce dernier est alors configuré dans son état bloqué.

De façon optionnelle et dans l'exemple décrit ici, le drain du premier transistor de contrôle Q2 est reliée électriquement à la grille du premier transistor d'interconnexion Q1 par l'intermédiaire d'une résistance de grille R3.

Dans l'exemple décrit ici et de façon également optionnelle, une diode D2 est connectée entre la source et la grille du premier transistor de contrôle Q2. Plus précisément, la cathode de la diode D2 est connectée à la grille du premier transistor de contrôle Q2 et l'anode de la diode D2 est connectée à la source du premier transistor de contrôle Q2. L'utilisation d'une diode D2 placé en dérivation entre la grille et la source du transistor Q2 permet d'éviter l'application d'une tension excessive entre la source et la grille du premier transistor de contrôle Q2, protégeant ainsi celui-ci d'une éventuelle surtension. De façon préférentielle, la diode D2 est une diode zener.

Dans une variante de réalisation du premier dispositif de pilotage 11, le transistor Q2 est un transistor bipolaire NPN. Dans cette variante de réalisation :
- l'anode de la première diode zener D1 est connectée électriquement à la base du premier transistor de contrôle Q2 et à la résistance de rappel R1 par l'intermédiaire de la résistance R2,
- le collecteur du premier transistor de contrôle Q2 est connectée électriquement à la grille du premier transistor d'interconnexion Q1, et
- l'émetteur du premier transistor de contrôle Q2 est connectée électriquement à la première référence électrique GND1.

L'interrupteur électronique 10 illustré sur la [Fig 5] comprend en outre un module de commande 15 permettant de contrôler l'état de conduction du deuxième transistor d'interconnexion Q3.

Dans cet exemple de réalisation, le module de commande 15 comprend un deuxième dispositif de pilotage 14 et un module d'activation 13.

En variante, le module de commande 15 comprend seulement un deuxième dispositif de pilotage 14.

Le deuxième dispositif de pilotage 14 est configuré pour piloter la polarisation de la grille du deuxième transistor d'interconnexion Q3. En particulier, le deuxième dispositif de pilotage 14 comprend un deuxième transistor de contrôle Q4 configuré pour piloter un état de conduction du deuxième transistor d'interconnexion Q3.

Le deuxième transistor de contrôle Q4 du deuxième dispositif de pilotage 14 peut être un transistor bipolaire NPN ou un MOSFET canal N. Dans l'exemple décrit ici, le deuxième transistor de contrôle Q4 est un MOSFET canal N. Le drain du deuxième transistor de contrôle Q4 est connectée électriquement à la grille du deuxième transistor d'interconnexion Q3, par exemple par l'intermédiaire d'une résistance de grille R11. La source du deuxième transistor de contrôle Q4 du deuxième dispositif de pilotage 14 est reliée à la deuxième référence électrique GND2.

Ainsi, si le deuxième transistor de contrôle Q4 est configuré dans un état de conduction passant, alors la grille du deuxième transistor d'interconnexion Q3 est polarisée et, consécutivement, le deuxième transistor d'interconnexion Q3 est alors configuré dans son état de conduction passant. En revanche, si le deuxième transistor de contrôle Q4 du deuxième dispositif de pilotage 14 est configuré dans un état de conduction bloquant, alors la grille du deuxième transistor d'interconnexion Q3 n'est pas polarisée et, consécutivement, le deuxième transistor d'interconnexion Q3 est alors configuré dans son état de conduction bloquant.

L'état passant ou bloqué du deuxième transistor de contrôle Q4 et par suite du deuxième transistor d'interconnexion Q3 est déterminé par un pont diviseur de tension. Le pont diviseur de tension est formé par une résistance de polarisation R10 en série avec une deuxième résistance de rappel R13, ladite association en série de la résistance de polarisation R10 et de la deuxième résistance de rappel R13 étant connectée entre la ligne électrique intermédiaire INT et la deuxième référence électrique GND2.

En outre, la résistance de polarisation R10 est connectée électriquement par une de ses bornes à la ligne électrique intermédiaire INT et par l'autre de ses bornes à la grille du deuxième transistor de contrôle Q4 et à la deuxième résistance de rappel R13. Par ailleurs, la deuxième résistance de rappel R13 est connecté électriquement par une de ses bornes à la deuxième référence électrique GND2, et par l'autre de ses bornes à la grille du deuxième transistor de contrôle Q4 et à la résistance de polarisation R10.

Ainsi, si une tension supérieure à un deuxième seuil est présente sur la ligne intermédiaire INT alors le deuxième transistor de contrôle Q4 du deuxième dispositif de pilotage 14 est configuré dans un état de conduction passant et, consécutivement, le deuxième transistor d'interconnexion Q3 est alors configuré également dans son état de conduction passant. Dans le mode de réalisation décrit ici, le premier seuil est égal ou supérieur au deuxième seuil additionné à la chute de tension aux bornes du transistor d'interconnexion Q1. En d'autres termes, si la valeur de la tension BT dépasse le premier seuil alors le premier transistor d'interconnexion Q1 est passant et la tension sur la ligne intermédiaire INT est suffisante pour polariser le deuxième transistor de contrôle Q4 de sorte que ce transistor soit passant.

De façon optionnelle, une diode de protection D14 de la grille du deuxième transistor de contrôle Q4 du deuxième dispositif de pilotage 14 est placée en parallèle avec la résistance de rappel R13. La diode de protection D14 et la résistance de rappel R13 sont placées chacune en parallèle entre la grille et la source du deuxième transistor de contrôle Q4. La cathode de la diode D14 est reliée électriquement à la grille du deuxième transistor de contrôle Q4 tandis que l'anode de la diode D14 est reliée à la source du deuxième transistor de contrôle Q4. De façon avantageuse, la diode D14 est une diode zener.

Le module d'activation 13 comprend un transistor bipolaire NPN Q5 dont :
- L'émetteur est connecté électriquement à la deuxième référence électrique GND2 ;
- le collecteur est reliée électriquement à la grille du deuxième transistor de contrôle Q4 et par l'intermédiaire de la résistance de polarisation R10 à la ligne intermédiaire INT ;
- la base est connectée électriquement à la borne de commande BC de l'interrupteur électronique 10.

De façon optionnelle, le module d'activation 13 comprend en outre une résistance interne de base R8 située entre la base dudit transistor bipolaire Q5 et la borne de commande BC décrite précédemment ;

De façon optionnelle, le module d'activation 13 comprend en outre une résistance de rappel R9 située en dérivation entre la base et l'émetteur du transistor bipolaire Q5.

De façon optionnelle, le module d'activation 13 comprend en outre une diode D15 connectée par sa cathode au collecteur du transistor Q5 et par son anode à la grille du deuxième transistor de contrôle Q4 et à une borne de la résistance de polarisation R10.

La borne de commande BC du module d'activation 13 peut être sélectivement mise à :
un premier potentiel électrique permettant de polariser le deuxième transistor d'interconnexion Q3 de manière à être configuré dans son état bloqué, ou à
un deuxième potentiel électrique permettant de polariser le deuxième transistor d'interconnexion Q3 dans son état passant.

En d'autres termes, le signal de commande appliqué sur la borne de commande est une tension pouvant prendre les deux valeurs différentes que sont le premier et le deuxième potentiel électrique.

Ainsi, la borne de commande BC du module d'activation 13 peut être sélectivement mise à :
- un premier potentiel électrique permettant de polariser le transistor Q5 du module d'activation 13 dans un état de conduction passant. Dans ce cas, le deuxième transistor de contrôle Q4 du deuxième dispositif de pilotage 14 est polarisé de manière à être configuré dans son état de conduction bloquant, le deuxième transistor d'interconnexion Q3 étant à son tour polarisé de manière à être configuré dans son état de conduction bloquant. En d'autres termes, lorsque la borne de commande BC du module d'activation 13 est mise au premier potentiel, le deuxième transistor d'interconnexion Q3 est forcé dans son état de conduction bloquant indépendamment du potentiel électrique présent sur la ligne électrique intermédiaire INT. Consécutivement, le commutateur électronique 1000 est forcé dans son état ouvert.
- un deuxième potentiel électrique permettant de polariser le transistor Q5 du module d'activation 13 dans un état de conduction bloqué. Dans ce cas, l'état passant ou bloqué du deuxième transistor de contrôle Q4 dépend du potentiel présent sur la ligne intermédiaire INT par rapport à la deuxième référence électrique GND2, ce potentiel étant ramené sur la grille du deuxième transistor de contrôle Q4 par l'intermédiaire du pont diviseur formé par la résistance de polarisation R10 et par la deuxième résistance de rappel R13.

Dans l'exemple décrit ici, le deuxième potentiel électrique est à zéro et le premier potentiel électrique est de quelques volts, par exemple 3V ou 3,3 V.

Dans l'exemple décrit ici, la borne de commande BC du module de commande 13 est mise au deuxième potentiel électrique, par exemple par un microcontrôleur, seulement lorsque le signal d'alimentation électrique HT n'est pas présent sur la deuxième borne d'alimentation électrique du système 1000 tel que représenté sur la [Fig 1] ou lorsque le microcontrôleur n'est pas alimenté électriquement. La borne de commande BC du module de commande 13 est mise au premier potentiel électrique, lorsque le microcontrôleur est alimenté et que le signal d'alimentation électrique HT est présent sur la deuxième borne d'alimentation électrique du système 1000 tel que représenté sur la [Fig 1]. En d'autres termes, la borne de commande BC du module de commande 13 est mise au premier potentiel électrique, lorsque le microcontrôleur est alimenté et lorsqu'une deuxième tension non nulle est présente sur la première borne d'entrée E2 de l'opérateur logique 130.

D'autre part, le transistor Q1 est dans son état passant seulement, si une tension BT est présente sur la première borne d'alimentation du système électrique 1000. Ainsi, le commutateur électronique 1000 est dans son état fermé tel que décrit précédemment, en référence à la [Fig 4], seulement lorsque simultanément Q1 est passant (signal BT disponible) et Q3 est passant (signal HT non disponible).

Dans le mode particulier de réalisation de l'invention décrit à la [Fig 5], l'interrupteur électronique 10 comprend en outre un dispositif de protection 12 de la ligne électrique intermédiaire INT. Ce dispositif de protection 12 permet de relier électriquement la ligne intermédiaire INT à la deuxième référence électrique GND2 par l'intermédiaire de la résistance de polarisation R10 lorsque le potentiel électrique de la ligne intermédiaire INT dépasse un seuil, par exemple prédéterminé à partir de la tension zener d'une diode zener, au-delà duquel le potentiel électrique de la ligne électrique intermédiaire INT est considéré comme étant excessif.

En variante, dans un autre mode de réalisation de l'invention, l'interrupteur électronique 10 ne comprend pas de dispositif de protection 12 de la ligne électrique intermédiaire INT.

Dans l'exemple décrit ici, le dispositif de protection 12 comprend un transistor de protection Q6 et une diode zener de détection D4. La cathode de la diode zener de détection D4 est connectée électriquement à la ligne électrique intermédiaire INT. L'anode de la diode zener de détection D4 est reliée électriquement à la base du transistor de protection Q6 par l'intermédiaire d'une résistance de base R5. L'émetteur du transistor de protection Q6 est reliée électriquement à la deuxième référence électrique GND2 du commutateur électronique 1000 et le collecteur du transistor de protection Q6 est reliée électriquement à la ligne électrique intermédiaire INT par l'intermédiaire de la résistance R10.

De façon optionnelle, le transistor de protection Q6 comprend en outre une résistance interne de base R6 située dans une position intermédiaire entre la base dudit transistor de protection Q6 et la résistance de base R5 décrite précédemment.

De façon également optionnelle, le transistor de protection Q6 comprend en outre une résistance interne de rappel R7 située en dérivation entre la base et l'émetteur du transistor de protection Q6.

Le transistor de protection Q6 du dispositif de protection 12 est préférentiellement du type d'un transistor bipolaire NPN.

La tension zener de la diode zener de détection D4 additionnée à la chute de tension entre la base et l'émetteur du transistor de protection Q6 détermine un seuil au-delà duquel le potentiel électrique de la ligne électrique intermédiaire INT est considéré comme étant excessif. Lorsque le potentiel électrique de la ligne électrique intermédiaire INT est supérieur à la tension zener de la diode zener de détection D4, le transistor de protection Q6 devient passant. Le point de potentiel commun entre la résistance R10 et le transistor de protection Q6 est alors ramené à la deuxième référence électrique GND2 et le deuxième transistor de contrôle Q4 ainsi que le deuxième transistor d'interconnexion Q3 passent dans un état bloqué.

Le collecteur du transistor de protection Q6 est reliée électriquement à la grille du deuxième transistor de contrôle Q4 du deuxième dispositif de pilotage 14 afin de pouvoir piloter son état de conduction en fonction du potentiel électrique de la ligne électrique intermédiaire INT, tel que décrit précédemment.

Ainsi, par l'intermédiaire du dispositif de protection 12, le commutateur électronique permet de maîtriser des écarts de tension supérieur à un seuil prédéterminé entre la ligne électrique intermédiaire INT et la deuxième référence électrique GND2. Cette surtension au niveau de la ligne électrique intermédiaire INT peut être due à une surtension au niveau de la borne d'entrée E1 ou à un décalage entre la première référence électrique GND1 et la deuxième référence électrique GND2.

Complémentairement, le commutateur électronique 1000 possédant un tel dispositif de protection 12 permet également de protéger la borne de sortie BS de l'opérateur logique 130 d'une surtension par rapport à la deuxième référence électrique GND2.

## Revendications

1. Commutateur électronique (1000) comprenant :
- un interrupteur électronique (10) comprenant une borne d'entrée (E1) destinée à recevoir une première tension (BT) référencée par rapport à une première référence électrique (GND1), et une borne de sortie (S1), et
- un opérateur logique (130) comprenant une première borne d'entrée (E2) destinée à recevoir une deuxième tension (U1) référencée par rapport à une deuxième référence électrique (GND2), une deuxième borne d'entrée (E3) reliée électriquement à ladite borne de sortie (S1) de l'interrupteur électronique (10), et une borne de sortie (BS),
ledit interrupteur électronique (10) étant configuré pour prendre sélectivement une première position dans laquelle sa borne d'entrée (E1) est connecté à sa borne de sortie (S1), ou une deuxième position dans laquelle sa borne d'entrée (E1) est déconnectée de sa borne de sortie (S1), et en ce que ledit opérateur logique (130) est caractérisé en qu'il est configuré pour appliquer sur sa borne de sortie (BS) la plus grande des tensions parmi la tension présente sur sa première borne d'entrée (E2) décalé d'un offset de tension et la tension présente sur sa deuxième borne d'entrée (E3) décalée dudit offset de tension.

2. Commutateur électronique (1000) selon la revendication précédente dans lequel l'interrupteur électronique (10) comprend en outre :
- un premier transistor d'interconnexion (Q1) configuré pour pouvoir connecter électriquement la borne d'entrée (E1) de l'interrupteur électronique (10) à une ligne électrique intermédiaire (INT) lorsque le premier transistor d'interconnexion (Q1) est dans son état passant,
- un deuxième transistor d'interconnexion (Q3) configuré pour pouvoir connecter électriquement la borne de sortie (S1) de l'interrupteur électronique (10) à ladite ligne électrique intermédiaire (INT) lorsque le deuxième transistor d'interconnexion (Q3) est dans son état passant,
- un premier dispositif de pilotage (11) conçu pour faire passer le premier transistor d'interconnexion (Q1) de l'état bloqué à l'état passant lorsque la tension présente sur la borne d'entrée (E1) de l'interrupteur électronique (10) est supérieure à un premier seuil et de l'état passant à l'état bloqué sinon, et
- un module de commande (15) conçu pour faire passer le deuxième transistor d'interconnexion (Q3) de l'état bloqué à l'état passant lorsque le potentiel de la ligne électrique intermédiaire (INT) est supérieur à une deuxième seuil et de l'état passant à l'état bloqué sinon.

3. Commutateur électronique (1000) selon la revendication précédente dans lequel ledit premier transistor d'interconnexion (Q1) est un MOSFET canal P.

4. Commutateur électronique (1000) selon l'une des revendications précédentes dans lequel l'interrupteur électronique (10) comprend en outre une première borne de référencement à une première référence électrique (GND1).

5. Commutateur électronique (1000) selon la revendication 3 et 4 dans lequel ledit premier dispositif de pilotage (11) comprend en outre :
- un premier transistor de contrôle (Q2), ledit premier transistor de contrôle (Q2) étant un MOSFET canal N,
- une première diode zener (D1) en série avec une première résistance de rappel (R1),
ladite association en série de la première diode zener (D1) et de la première résistance de rappel (R1) étant connectée entre la borne d'entrée (E1) de l'interrupteur électronique (10) et la première borne de référencement, la cathode de la première diode zener (D1) étant connectée électriquement à la borne d'entrée (E1) de l'interrupteur électronique (10), l'anode de la première diode zener (D1) étant connectée électriquement à la grille du premier transistor de contrôle (Q2) et à la première résistance de rappel (R1), le drain du premier transistor de contrôle (Q2) étant connectée électriquement à la grille du premier transistor d'interconnexion (Q1), et la source du premier transistor de contrôle (Q2) étant connectée électriquement à la première borne de référencement.

6. Commutateur électronique (1000) selon l'une des revendications 2 à 5 dans lequel ledit deuxième transistor d'interconnexion (Q3) est un MOSFET canal P.

7. Commutateur électronique (1000) selon l'une des revendications précédentes dans lequel l'interrupteur électronique (10) comprend en outre une deuxième borne de référencement à une deuxième référence électrique (GND2).

8. Commutateur électronique (1000) selon la revendication 6 et 7 dans lequel ledit module de commande (15) comprend en outre :
• un deuxième transistor de contrôle (Q4), ledit deuxième transistor de contrôle (Q4) étant un MOSFET canal N, le drain du deuxième transistor de contrôle (Q4) étant connecté électriquement à la grille du deuxième transistor d'interconnexion (Q3), par exemple par l'intermédiaire d'une résistance de grille (R11) et la source du deuxième transistor de contrôle (Q4) étant reliée à la deuxième référence électrique (GND2)
• une résistance de polarisation (R10) en série avec une deuxième résistance de rappel (R13),
ladite association en série de la résistance de polarisation (R10) et de la deuxième résistance de rappel (R13) étant connectée entre la ligne électrique intermédiaire (INT) et la deuxième borne de référencement, la résistance de polarisation (R10) étant connectée électriquement par une de ses bornes à la ligne électrique intermédiaire (INT) et par l'autre de ses bornes à la grille du deuxième transistor de contrôle (Q4) et à la deuxième résistance de rappel (R13), et la deuxième résistance de rappel (R13) étant connecté électriquement par une de ses bornes à la deuxième borne de référencement, et par l'autre de ses bornes simultanément à la grille du deuxième transistor de contrôle (Q4) et à la résistance de polarisation (R10).

9. Commutateur électronique (1000) selon l'une des revendication 2 à 8 dans lequel ledit interrupteur électronique comprend en outre une borne de commande (BC) et dans lequel ledit module de commande (15) comprend en outre un module d'activation (13) conçu pour forcer le deuxième transistor d'interconnexion (Q3) dans son état bloqué lorsqu'un signal de commande est reçu sur la borne de commande (BC) de l'interrupteur électronique (10).

10. Commutateur électronique (1000) selon les revendications 8 et 9 dans lequel le module d'activation (13) comprend un transistor bipolaire NPN (Q5) dont :
• L'émetteur est connecté électriquement à la deuxième borne de référencement,
• le collecteur est reliée électriquement à la grille du deuxième transistor de contrôle (Q4) et à la ligne intermédiaire (INT) par l'intermédiaire de la résistance de polarisation (R10), et
• la base est connectée électriquement à la borne de commande (BC) du commutateur électronique (1000).

11. Commutateur électronique (1000) selon l'une des revendication 8 à 10 dans lequel l'interrupteur électronique (10) comprend en outre un dispositif de protection (12) de la ligne électrique intermédiaire (INT) conçu pour relier électriquement la ligne électrique intermédiaire (INT) à la deuxième référence électrique (GND2) par l'intermédiaire de la résistance de polarisation (R10) lorsque la différence de tension entre la ligne électrique intermédiaire (INT) et la deuxième référence électrique (GND2) est supérieure à un troisième seuil.

12. Commutateur électronique (1000) selon l'une des revendications précédentes dans lequel ledit opérateur logique (130) comprend une première diode (D12) et une deuxième diode (D11), l'anode de la première diode (D12) étant reliée électriquement à la deuxième borne d'entrée (E3) de l'opérateur logique (130), l'anode de la deuxième diode (D11) étant reliée électriquement à la première borne d'entrée (E2) de l'opérateur logique (130), la cathode de la première diode étant reliée électriquement à la cathode de la deuxième diode, la borne de sortie (BS) de l'opérateur logique (130) étant relié électriquement à un point situé entre la cathode de la première (D12) et la cathode de la deuxième (D11) diode.

13. Système électrique (100) destiné à contrôler une machine électrique tournante d'un véhicule automobile, le système électrique comprenant :
• un commutateur électronique (1000) selon l'une des revendications précédentes,
• une première borne d'alimentation électrique destinée à recevoir un signal d'alimentation électrique haute tension (HT) référencée par rapport à la deuxième référence électrique (GND2),
• une source d'alimentation électrique (110) configuré pour, à partir du signal d'alimentation électrique haute tension (HT) reçu sur la première borne d'alimentation électrique, fournir un signal d'alimentation électrique basse tension régulée (U1) sur la première borne d'entrée de l'opérateur logique (130) dudit commutateur électronique.

## Patentansprüche

1. Elektronische Schaltervorrichtung (1000), umfassend:
- einen elektronischen Schalter (10) mit einem Eingangsanschluss (E1) zum Empfangen einer ersten Spannung (BT), die auf eine erste elektrische Referenz (GND1) bezogen ist, und einem Ausgangsanschluss (S1), und
- einen Logikoperator (130) mit einem ersten Eingangsanschluss (E2) zum Empfangen einer zweiten Spannung (U1), die auf eine zweite elektrische Referenz (GND2) bezogen ist, einem zweiten Eingangsanschluss (E3), der elektrisch mit dem genannten Ausgangsanschluss (S1) des elektronischen Schalters (10) verbunden ist, sowie einen Ausgangsanschluss (BS),
wobei der elektronische Schalter (10) so konfiguriert ist, dass er wahlweise eine erste Position einnimmt, in der sein Eingangsanschluss (E1) mit seinem Ausgangsanschluss (S1) verbunden ist, oder eine zweite Position, in der sein Eingangsanschluss (E1) von seinem Ausgangsanschluss (S1) getrennt ist, und dass der Logikoperator (130) **dadurch gekennzeichnet ist, dass** er so konfiguriert ist, dass er an seinem Ausgangsanschluss (BS) die höhere der beiden Spannungen anlegt, nämlich entweder die an seinem ersten Eingangsanschluss (E2) anliegende Spannung, verschoben um einen Spannungs-Offset, oder die an seinem zweiten Eingangsanschluss (E3) anliegende Spannung, verschoben um denselben Spannungs-Offset 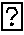

2. Elektronische Schaltervorrichtung (1000) nach dem vorstehenden Anspruch, wobei der elektronische Schalter (10) ferner umfasst:
- einen ersten Verbindungstransistor (Q1), der so konfiguriert ist, dass er den Eingangsanschluss (E1) des elektronischen Schalters (10) elektrisch mit einer elektrische Zwischenleitung (INT) verbinden kann, wenn sich der erste Verbindungstransistor (Q1) im Durchlasszustand befindet,
- einen zweiten Verbindungstransistor (Q3), der so ausgelegt ist, dass er den Ausgangsanschluss (S1) des elektronischen Schalters (10) elektrisch mit der genannten elektrischen Zwischenleitung (INT) verbinden kann, wenn sich der zweite Verbindungstransistor (Q3) im Durchlasszustand befindet,
- eine erste Ansteuervorrichtung (11), die so ausgelegt ist, dass sie den ersten Verbindungstransistor (Q1) vom Sperrzustand in den Durchlasszustand versetzt, wenn die an der Eingangsanschluss (E1) des elektronischen Schalters (10) anliegende Spannung einen ersten Schwellenwert überschreitet, und andernfalls vom Durchlasszustand in den Sperrzustand versetzt, und
- ein Steuermodul (15), das so ausgelegt ist, dass es den zweiten Verbindungstransistor (Q3) vom Sperrzustand in den Durchlasszustand versetzt, wenn das Potential der Zwischenleitung (INT) einen zweiten Schwellenwert überschreitet, und andernfalls vom Durchlasszustand in den Sperrzustand versetzt 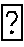

3. Elektronische Schaltervorrichtung (1000) nach dem vorstehenden Anspruch, wobei der erste Verbindungstransistor (Q1) ein p-Kanal-MOSFET ist 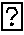

4. Elektronische Schaltervorrichtung (1000) nach einem der vorstehenden Ansprüche, wobei der elektronische Schalter (10) ferner einen ersten Anschluss zur Referenzierung auf eine erste elektrische Referenz (GND1) verbunden ist 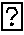

5. Elektronische Schaltervorrichtung (1000) gemäß den Ansprüchen 3 und 4, wobei die erste Ansteuerungsvorrichtung (11) ferner umfasst:
- einen ersten Steuertransistor (Q2), wobei der erste Steuertransistor (Q2) ein N-Kanal-MOSFET ist,
- eine erste Zenerdiode (D1) in Reihe mit einem ersten Rückstellwiderstand (R1),
wobei die Reihenschaltung aus der ersten Zenerdiode (D1) und dem ersten Rückstellwiderstand (R1) zwischen dem Eingangsanschluss (E1) des elektronischen Schalters (10) und dem ersten Referenzanschluss angeschlossen ist, wobei die Kathode der ersten Zenerdiode (D1) elektrisch mit dem Eingangsanschluss (E1) des elektronischen Schalters (10) verbunden ist, die Anode der ersten Zenerdiode (D1) elektrisch mit dem Gate des ersten Steuertransistors (Q2) und mit dem ersten Rückstellwiderstand (R1) verbunden ist, wobei der Drain des ersten Steuertransistors (Q2) elektrisch mit dem Gate des ersten Verbindungstransistors (Q1) verbunden ist und die Source des ersten Steuertransistors (Q2) elektrisch mit dem ersten Referenzanschluss verbunden ist 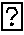

6. Elektronische Schaltervorrichtung (1000) nach einem der Ansprüche 2 bis 5, wobei der zweite Verbindungstransistor (Q3) ein p-Kanal-MOSFET ist 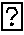

7. Elektronische Schaltervorrichtung (1000) nach einem der vorstehenden Ansprüche, wobei der elektronische Schalter (10) ferner einen zweiten Referenzanschluss an eine zweite elektrische Referenz (GND2) umfasst 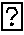

8. Elektronische Schaltervorrichtung (1000) gemäß den Ansprüchen 6 und 7, wobei das Steuermodul (15) ferner umfasst:
- einen zweiten Steuertransistor (Q4), wobei der zweite Steuertransistor (Q4) ein N-Kanal-MOSFET ist, wobei der Drain des zweiten Steuertransistors (Q4) elektrisch mit dem Gate des zweiten Verbindungstransistors (Q3) verbunden ist, beispielsweise über einen Gate-Widerstand (R11), und die Source des zweiten Steuertransistors (Q4) mit der zweiten elektrischen Referenz (GND2)
- einen Vorspannungswiderstand (R10) in Reihe mit einem zweiten Rückstellwiderstand (R13),
wobei diese Reihenschaltung aus dem Vorspannungswiderstand (R10) und dem zweiten Rückstellwiderstand (R13) zwischen der Zwischenleitung (INT) und dem zweiten Referenzanschluss angeschlossen ist, wobei der Vorspannungswiderstand (R10) mit einem seiner Anschlüsse elektrisch an die elektrische Zwischenleitung (INT) und mit seinem anderen Anschluss an das Gate des zweiten Steuertransistors (Q4) sowie an den zweiten Rückstellwiderstand (R13) angeschlossen ist, und der zweite Rückstellwiderstand (R13) mit einem seiner Anschlüsse elektrisch an den zweiten Referenzanschluss und mit seinem anderen Anschluss gleichzeitig an das Gate des zweiten Steuertransistors (Q4) und an den Vorspannungswiderstand (R10) angeschlossen ist 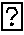

9. Elektronische Schaltervorrichtung (1000) nach einem der Ansprüche 2 bis 8, wobei der elektronische Schalter ferner einen Steueranschluss (BC) umfasst und wobei das Steuermodul (15) ferner ein Aktivierungsmodul (13) umfasst, das dazu ausgelegt ist, den zweiten Verbindungstransistor (Q3) in seinen Sperrzustand zu versetzen, wenn ein Steuersignal am Steueranschluss (BC) des elektronischen Schalters (10) empfangen wird 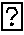

10. Elektronische Schaltervorrichtung (1000) nach den Ansprüchen 8 und 9, wobei das Aktivierungsmodul (13) einen NPN-Bipolartransistor (Q5) umfasst, dessen:
- Emitter elektrisch mit dem zweiten Referenzanschluss verbunden ist,
- dessen Kollektor über den Vorspannungswiderstand (R10) elektrisch mit dem Gate des zweiten Steuertransistors (Q4) und der Zwischenleitung (INT) verbunden ist, und
- dessen Basis elektrisch mit dem Steueranschluss (BC) des elektronischen Schalters (1000) verbunden ist 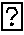

11. Elektronische Schaltervorrichtung (1000) gemäß einem der Ansprüche 8 bis 10, wobei der elektronische Schalter (10) ferner eine Schutzvorrichtung (12) für die elektrische Zwischenleitung (INT) umfasst, die dazu ausgelegt ist, die elektrische Zwischenleitung (INT) über den Vorspannungswiderstand (R10) elektrisch mit der zweiten elektrischen Referenz (GND2) zu verbinden, wenn die Spannungsdifferenz zwischen der elektrische Zwischenleitung (INT) und der zweiten elektrischen Referenz (GND2) größer als ein dritter Schwellenwert ist 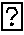

12. Elektronische Schaltervorrichtung (1000) nach einem der vorstehenden Ansprüche, wobei der Logikoperator (130) eine erste Diode (D12) und eine zweite Diode (D11) umfasst, wobei die Anode der ersten Diode (D12) elektrisch mit dem zweiten Eingangsanschluss (E3) des Logikoperators (130) verbunden ist, die Anode der zweiten Diode (D11) elektrisch mit dem ersten Eingangsanschluss (E2) des Logikoperators (130) verbunden ist, wobei die Kathode der ersten Diode elektrisch mit der Kathode der zweiten Diode verbunden ist, und der Ausgangsanschluss (BS) des Logikoperators (130) elektrisch mit einem Punkt verbunden ist, der zwischen der Kathode der ersten (D12) und der Kathode der zweiten (D11) Diode liegt 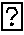

13. Elektrisches System (100) zur Steuerung einer rotierenden elektrischen Maschine eines Kraftfahrzeugs, wobei das elektrische System umfasst:
- einen elektronischen Schalter (1000) gemäß einem der vorstehenden Ansprüche,
- einen ersten Stromversorgungsanschluss zum Empfangen eines Hochspannungs-Stromversorgungssignals (HT), das auf die zweite elektrische Referenz (GND2) bezogen ist,
- eine Stromversorgungsquelle (110), die so ausgelegt ist, dass sie ausgehend von dem an der ersten Stromversorgungsanschluss empfangenen Hochspannungs-Stromversorgungssignal (HT) ein geregeltes Niederspannungs-Stromversorgungssignal (U1) an den ersten Eingangsanschluss des Logikoperators (130) des elektronischen Schalters liefert 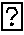

## Claims

1. An electronic switching device (1000) comprising:
- an electronic switch (10) comprising an input terminal (E1) for receiving a first voltage (BT) referenced to a first electrical reference (GND1), and an output terminal (S1), and
- a logic operator (130) comprising a first input terminal (E2) for receiving a second voltage (U1) referenced to a second electrical reference (GND2), a second input terminal (E3) electrically connected to said output terminal (S1) of the electronic switch (10), and an output terminal (BS),
said electronic switch (10) being configured to selectively assume a first position in which its input terminal (E1) is connected to its output terminal (S1), or a second position in which its input terminal (E1) is disconnected from its output terminal (S1), and in that said logic operator (130) is **characterized in that** it is configured to apply to its output terminal (BS) the higher of the voltage present at its first input terminal (E2) shifted by a voltage offset and the voltage present at its second input terminal (E3) shifted by said voltage offset 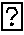

2. An electronic switching device (1000) according to the preceding claim, wherein the electronic switch (10) further comprises:
- a first interconnection transistor (Q1) configured to be capable of electrically connecting the input terminal (E1) of the electronic switch (10) to an intermediate power line (INT) when the first interconnection transistor (Q1) is in its on-state,
- a second interconnection transistor (Q3) configured to be capable of electrically connecting the output terminal (S1) of the electronic switch (10) to the said intermediate power line (INT) when the second interconnection transistor (Q3) is in its on-state,
- a first control device (11) designed to switch the first interconnection transistor (Q1) from the off state to the on state when the voltage across the input terminal (E1) of the electronic switch (10) exceeds a first threshold, and from the on state to the off state otherwise, and
- a control module (15) designed to switch the second interconnection transistor (Q3) from the off state to the on state when the potential of the intermediate power line (INT) is greater than a second threshold, and from the on state to the off state otherwise 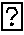

3. An electronic switching device (1000) according to the preceding claim, wherein said first interconnection transistor (Q1) is a P-channel MOSFET 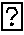

4. An electronic switching device (1000) according to one of the preceding claims, wherein the electronic switch (10) further comprises a first terminal for reference to a first electrical reference (GND1) 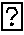

5. An electronic switching device (1000) according to claims 3 and 4, in which said first control device (11) further comprises:
- a first control transistor (Q2), said first control transistor (Q2) being an N-channel MOSFET,
- a first Zener diode (D1) in series with a first return resistor (R1),
said series combination of the first Zener diode (D1) and the first return resistor (R1) being connected between the input terminal (E1) of the electronic switch (10) and the first reference terminal, the cathode of the first Zener diode (D1) being electrically connected to the input terminal (E1) of the electronic switch (10), the anode of the first Zener diode (D1) being electrically connected to the gate of the first control transistor (Q2) and to the first return resistor (R1), the drain of the first control transistor (Q2) being electrically connected to the gate of the first interconnection transistor (Q1), and the source of the first control transistor (Q2) being electrically connected to the first reference terminal 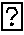

6. An electronic switching device (1000) according to one of claims 2 to 5, wherein said second interconnection transistor (Q3) is a P-channel MOSFET 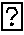

7. An electronic switching device (1000) according to any one of the preceding claims, wherein the electronic switch (10) further comprises a second reference terminal connected to a second electrical reference (GND2) 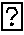

8. An electronic switching device (1000) according to claims 6 and 7, wherein said control module (15) further comprises:
- a second control transistor (Q4), said second control transistor (Q4) being an N-channel MOSFET, the drain of the second control transistor (Q4) being electrically connected to the gate of the second interconnection transistor (Q3), for example via a gate resistor (R11), and the source of the second control transistor (Q4) being connected to the second electrical reference (GND2)
- a bias resistor (R10) in series with a second return resistor (R13),
said series combination of the bias resistor (R10) and the second return resistor (R13) being connected between the intermediate power line (INT) and the second reference terminal, the bias resistor (R10) being electrically connected at one of its terminals to the intermediate power line (INT) and at its other terminal to the gate of the second control transistor (Q4) and to the second return resistor (R13), and the second return resistor (R13) being electrically connected at one of its terminals to the second reference terminal, and at its other terminal simultaneously to the gate of the second control transistor (Q4) and to the bias resistor (R10) 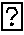

9. An electronic switching device (1000) according to any one of claims 2 to 8, wherein said electronic switching device further comprises a control terminal (BC) and wherein said control module (15) further comprises an activation module (13) designed to force the second interconnection transistor (Q3) into its off state when a control signal is received at the control terminal (BC) of the electronic switch (10) 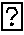

10. An electronic switching device (1000) according to claims 8 and 9, wherein the activation module (13) comprises an NPN bipolar transistor (Q5) in which:
- the emitter is electrically connected to the second reference terminal,
- the collector is electrically connected to the gate of the second control transistor (Q4) and to the intermediate line (INT) via the bias resistor (R10), and
- the base is electrically connected to the control terminal (BC) of the electronic switching device (1000) 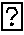

11. An electronic switching device (1000) according to any one of claims 8 to 10, wherein the electronic switch (10) further comprises a protection device (12) for the intermediate power line (INT), designed to electrically connect the intermediate power line (INT) to the second reference (GND2) via the bias resistor (R10) when the voltage difference between the intermediate power line (INT) and the second electrical reference (GND2) exceeds a third threshold 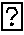

12. An electronic switching device (1000) according to one of the preceding claims, wherein said logic operator (130) comprises a first diode (D12) and a second diode (D11), the anode of the first diode (D12) being electrically connected to the second input terminal (E3) of the logic operator (130), the anode of the second diode (D11) being electrically connected to the first input terminal (E2) of the logic operator (130), the cathode of the first diode being electrically connected to the cathode of the second diode, the output terminal (BS) of the logic operator (130) being electrically connected to a point situated between the cathode of the first (D12) and the cathode of the second (D11) diode 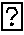

13. An electrical system (100) for controlling a rotating electric machine in a motor vehicle, the electrical system comprising:
- an electronic switching device (1000) according to one of the preceding claims,
- a first power supply terminal for receiving a high-voltage power supply signal (HV) referenced to the second electrical reference (GND2),
- a power supply (110) configured to supply, from the high-voltage power supply signal (HV) received at the first power supply terminal, a regulated low-voltage power supply signal (U1) to the first input terminal of the logic operator (130) of said electronic switching device
